(19) Europäisches Patentamt
European Patent Office
Office européen des brevets

(11) **EP 3 361 660 A1**

(12) **EUROPEAN PATENT APPLICATION**

(43) Date of publication:
**15.08.2018 Bulletin 2018/33**

(51) Int Cl.:
***H04L 1/00*** (2006.01)

(21) Application number: **17156029.5**

(22) Date of filing: **14.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Technologies Oy 02610 Espoo (FI)**

(72) Inventor: **Enescu, Mihai 02120 Espoo (FI)**

(74) Representative: **Borgström, Markus Nokia Solutions and Networks OY St.-Martin-Strasse 76 80240 Munich (DE)**

(54) **MAPPING CONFIGURATION**

(57)     A method comprising: transmitting one or more reporting settings from an apparatus to a user equipment, the one or more reporting settings associated with a reporting resource on which the user equipment is to provide one or more measurements; in response to receiving one or more measurements from the user equipment, determining scheduling and grouping of a plurality of layers of a communication resource; using a first code setting, indicating to the user equipment in a first indication that reporting from the user equipment is to be configured for a first set of one or more communication layers of the plurality of layers; and using a second code setting, indicating to the user equipment in a second indication that reporting from the user equipment is to be configured for a second set of one or more communication layers of the plurality of layers.

Figure 6

EP 3 361 660 A1

Printed by Jouve, 75001 PARIS (FR)

**Description**

Field

This disclosure relates to communications, and more particularly to a mapping configuration in a wireless communication system. More particularly the present invention relates to the mapping of codewords to communication layers.

Background

A communication system can be seen as a facility that enables communication between two or more devices such as user terminals, machine-like terminals, base stations and/or other nodes by providing communication channels for carrying information between the communicating devices. A communication system can be provided for example by means of a communication network and one or more compatible communication devices. The communication may comprise, for example, communication of data for carrying data for voice, electronic mail (email), text message, multimedia and/or content data communications and so on. Non-limiting examples of services provided include two-way or multi-way calls, data communication or multimedia services and access to a data network system, such as the Internet.

In a wireless system at least a part of communications occurs over wireless interfaces. Examples of wireless systems include public land mobile networks (PLMN), satellite based communication systems and different wireless local networks, for example wireless local area networks (WLAN). A local area wireless networking technology allowing devices to connect to a data network is known by the tradename WiFi (or Wi-Fi). WiFi is often used synonymously with WLAN. The wireless systems can be divided into cells, and are therefore often referred to as cellular systems. A base station provides at least one cell.

A user can access a communication system by means of an appropriate communication device or terminal capable of communicating with a base station. Hence nodes like base stations are often referred to as access points. A communication device of a user is often referred to as user equipment (UE). A communication device is provided with an appropriate signal receiving and transmitting apparatus for enabling communications, for example enabling communications with the base station and/or communications directly with other user devices. The communication device can communicate on appropriate channels, e.g. listen to a channel on which a station, for example a base station of a cell, transmits.

A communication system and associated devices typically operate in accordance with a given standard or specification which sets out what the various entities associated with the system are permitted to do and how that should be achieved. Communication protocols and/or parameters which shall be used for the connection are also typically defined. Non-limiting examples of standardised radio access technologies include GSM (Global System for Mobile), EDGE (Enhanced Data for GSM Evolution) Radio Access Networks (GERAN), Universal Terrestrial Radio Access Networks (UTRAN) and evolved UTRAN (E-UTRAN). An example communication system architecture is the long-term evolution (LTE) of the Universal Mobile Telecommunications System (UMTS) radio-access technology. The LTE is standardized by the third Generation Partnership Project (3GPP). The LTE employs the Evolved Universal Terrestrial Radio Access Network (E-UTRAN) access and a further development thereof which is sometimes referred to as LTE Advanced (LTE-A). Since introduction of fourth generation (4G) services increasing interest has been paid to the next, or fifth generation (5G) standard. 5G may also be referred to as a New Radio (NR) network. Standardization of 5G or New Radio networks is an on-going study item.

Statement of invention

In a first aspect there is provided a method comprising: transmitting one or more reporting settings from an apparatus to a user equipment, the one or more reporting settings associated with a reporting resource on which the user equipment is to provide one or more measurements; in response to receiving one or more measurements from the user equipment, determining scheduling and grouping of a plurality of layers of a communication resource; using a first code setting, indicating to the user equipment in a first indication that reporting from the user equipment is to be configured for a first set of one or more communication layers of the plurality of layers; and using a second code setting, indicating to the user equipment in a second indication that reporting from the user equipment is to be configured for a second set of one or more communication layers of the plurality of layers.

According to some embodiments the method comprises using information received from the user equipment to transmit to the user equipment, from a single transmission point, using multiple physical downlink shared channels.

According to some embodiments the reporting setting comprises a channel state information reporting setting indicating to the user equipment to provide one or more measurements of: rank information; precoding matrix indicator information; channel quality indicator information.

According to some embodiments, when there is a plurality of reporting settings each reporting setting is linked by one or more common channel state information components.

According to some embodiments the first code setting is associated with a first reporting setting and the second code setting is associated with a second reporting setting, the first and second reporting settings associated with respective first and second resource settings, the first and second resource settings being linked or associated with each other.

According to some embodiments, the first and second resource settings are the same.

According to some embodiments the reporting from the user equipment using the first indication, and the reporting from the user equipment using the second indication both use the same reporting resource, the reporting resource comprising a channel state information reference signal pattern.

According to some embodiments, the code settings comprise codebook subset restrictions indicating the layers which are used for a same codeword.

A method as set forth in any preceding claim, wherein the first and second indications are transmitted to the user equipment simultaneously.

According to some embodiments, the first and second indications consist of the same CSI parameters.

According to some embodiments, the method is carried out at a single transmission point.

According to some embodiments, the apparatus comprises a 5G base station.

In a second aspect there is provided a method comprising: receiving at an apparatus one or more reporting settings, the one or more reporting settings associated with a reporting resource on which the user equipment is to provide one or more measurements; performing one or more measurements at the apparatus, and transmitting the measurements to a base station; receiving at the apparatus a first indication, the first indication indicating that reporting from the apparatus is to be configured for a first set of one or more communication layers of a plurality of layers of a communication resource; receiving at the apparatus a second indication, the second indication indicating that reporting from the apparatus is to be configured for a second set of one or more communication layers of the plurality of layers.

According to some embodiments the method comprises communicating with a single base station using multiple physical downlink shared channels.

According to some embodiments the measurements comprise one or more measurements of: rank information; precoding matrix indicator information; channel quality indicator information.

According to some embodiments the method comprises transmitting a first channel quality indicator associated with all layers of the plurality of layers, transmitting a second channel quality indicator associated with the first set of one or more communication layers, and transmitting a third channel quality indicator associated with the second set of one or more communication layers.

According to some embodiments the reporting from the apparatus for the first set of one or more communication layers, and the reporting from the apparatus for the second set of one or more communication layers both use the same reporting resource, the reporting resource comprising a channel state information reference signal pattern.

According to some embodiments the reporting from the apparatus for the first set of one or more communication layers, and the reporting from the apparatus for the second set of one or more communication layers use different reporting resources, the different reporting resources having at least one common parameter configuration, the common parameter configuration comprising a common channel state information reference signal pattern.

According to some embodiments the different reporting resources have different interference reference signal patterns.

According to some embodiments the plurality of layers of a communication resource comprise a plurality of communication channels.

According to some embodiments the apparatus is configured to determine a first channel quality indicator based on a first codebook subset restriction indication, and the apparatus is configured to determine a second channel quality indicator based on a second codebook subset restriction indication.

According to some embodiments, the first and second indications are received at the apparatus simultaneously.

According to some embodiments, the base station comprises a single transmission point.

According to some embodiments, the apparatus comprises a user equipment.

In a third aspect there is provided a computer program comprising program code means adapted to perform the steps of the first aspect when the program is run on a data processing apparatus.

In a fourth aspect there is provided a computer program comprising program code means adapted to perform the steps of the second aspect when the program is run on a data processing apparatus.

In a fifth aspect there is provided an apparatus comprising at least one processor, and at least one memory including computer program code, wherein the at least one memory and the computer program code are configured, with the at least one processor, to: transmit one or more reporting settings from the apparatus to a user equipment, the one or more reporting settings associated with a reporting resource on which the user equipment is to provide one or more measurements; in response to receiving one or more measurements from the user equipment, determine scheduling and grouping of a plurality of layers of a communication resource; using a first code setting, indicate to the user equipment in a first indication that reporting from the user equipment is to be configured for a first set of one or more communication layers of the plurality of layers; and using a second code setting, indicate to the user equipment in a second indication that reporting from the user equipment is to be configured for a second set of one or more communication layers of the plurality of layers.

In a sixth aspect there is provided an apparatus comprising: means for transmitting one or more reporting settings from the apparatus to a user equipment, the one or more reporting settings associated with a reporting resource on which the user equipment is to provide one or more measurements; in response to receiving one or more measurements from the user equipment, means for determining scheduling and grouping of a plurality of layers of a communication resource; using a first code setting, means for indicating to the user equipment in a first indication that reporting from the user equipment is to be configured for a first set of one or more communication layers of the plurality of layers; and using a second code setting, means for indicating to the user equipment in a second indication that reporting from the user equipment is to be configured for a second set of one or more communication layers of the plurality of layers.

According to embodiments of the fifth and sixth aspects, the apparatus is configured to use information received from the user equipment to transmit to the user equipment, from a single transmission point, using multiple physical downlink shared channels.

According to embodiments, the reporting setting comprises a channel state information reporting setting indicating to the user equipment to provide one or more measurements of: rank information; precoding matrix indicator information; channel quality indicator information.

According to embodiments, when there is a plurality of reporting settings each reporting setting is linked by one or more common channel state information components.

According to embodiments the first code setting is associated with a first reporting setting and the second code setting is associated with a second reporting setting, the first and second reporting settings associated with respective first and second resource settings, the first and second resource settings being linked or associated with each other.

According to embodiments the first and second resource settings are the same.

According to some embodiments, the reporting from the user equipment using the first indication, and the reporting from the user equipment using the second indication both use the same reporting resource, the reporting resource comprising a channel state information reference signal pattern.

According to some embodiments, the code settings comprise codebook subset restrictions indicating the layers which are used for a same codeword.

According to some embodiments, the apparatus is configured to transmit the first and second indications to the user equipment simultaneously.

According to some embodiments, the first and second indications consist of the same CSI parameters.

According to some embodiments, the apparatus comprises a single transmission point.

According to some embodiments, the apparatus comprises a 5G base station.

According to a seventh aspect there is provided an apparatus comprising at least one processor, and at least one memory including computer program code, wherein the at least one memory and the computer program code are configured, with the at least one processor, to: receive at the apparatus one or more reporting settings, the one or more reporting settings associated with a reporting resource on which the apparatus is to provide one or more measurements; perform one or more measurements at the apparatus, and transmitting the measurements to a base station; receive at the apparatus a first indication, the first indication indicating that reporting from the apparatus is to be configured for a first set of one or more communication layers of a plurality of layers of a communication resource; receive at the apparatus a second indication, the second indication indicating that reporting from the apparatus is to be configured for a second set of one or more communication layers of the plurality of layers.

According to an eighth aspect there is provided an apparatus comprising: means for receiving at the apparatus one or more reporting settings, the one or more reporting settings associated with a reporting resource on which the apparatus is to provide one or more measurements; means for performing one or more measurements at the apparatus, and means for transmitting the measurements to a base station; means for receiving at the apparatus a first indication, the first indication indicating that reporting from the apparatus is to be configured for a first set of one or more communication layers of a plurality of layers of a communication resource; means for receiving at the apparatus a second indication, the second indication indicating that reporting from the apparatus is to be configured for a second set of one or more communication layers of the plurality of layers.

According to some embodiments of the seventh and eighth aspects, the apparatus is configured to communicate with a single base station using multiple physical downlink shared channels.

According to some embodiments the measurements comprise one or more measurements of: rank information; precoding matrix indicator information; channel quality indicator information.

According to some embodiments, the apparatus is configured to transmit a first channel quality indicator associated with all layers of the plurality of layers, and transmit a second channel quality indicator associated with the first set of one or more communication layers, and transmit a third channel quality indicator associated with the second set of one or more communication layers.

According to some embodiments the reporting from the apparatus for the first set of one or more communication layers, and the reporting from the apparatus for the second set of one or more communication layers both use the same reporting resource, the reporting resource comprising a channel state information reference signal pattern.

According to some embodiments the reporting from the apparatus for the first set of one or more communication layers, and the reporting from the apparatus for the second set of one or more communication layers use different reporting resources, the different reporting resources having at least one common parameter configuration, the common parameter configuration comprising a common channel state information reference signal pattern.

According to some embodiments, the different reporting resources have different interference reference signal patterns.

According to some embodiments, the plurality of layers of a communication resource comprise a plurality of communication channels.

According to some embodiments, the apparatus is configured to determine a first channel quality indicator based on a first codebook subset restriction indication, and the apparatus is configured to determine a second channel quality indicator based on a second codebook subset restriction indication.

According to some embodiments, the apparatus is configured to receive the first and second indications simultaneously.

According to some embodiments, the base station comprises a single transmission point.

According to some embodiments, the apparatus comprises a user equipment.

Brief description of Figures

The invention will now be described in further detail, by way of example only, with reference to the following examples and accompanying drawings, in which:

Figure 1 shows a schematic example of a wireless communication system where the invention may be implemented;

Figure 2 shows an example of a communication device;

Figure 3 shows an example of a control apparatus;

Figure 4 shows an example of components of a system or apparatus for mapping codewords to layers;

Figure 5 shows an example of an association between a reporting setting and a resource setting, according to an embodiment;

Figure 6 shows multiple reporting settings associated with multiple resource settings, according to an embodiment;

Figure 7 is a flow chart of a method according to an embodiment viewed from the perspective of a base station;

Figure 8 is a flowchart of a method according to an embodiment, viewed from the perspective of a user equipment.

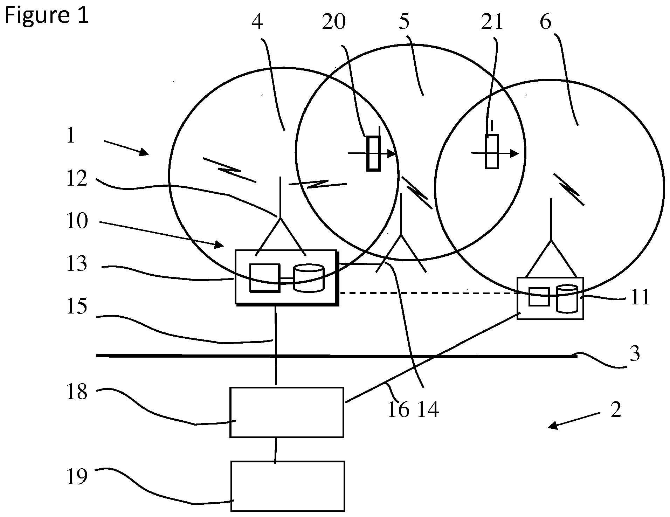

Before explaining in detail the examples, certain general principles of a wireless communication system and mobile communication devices are briefly explained with reference to Figures 1 to 2 to assist in understanding the technology underlying the described examples.

In a wireless communication system 100, such as that shown in Figure 1, a wireless communication devices, for example, user equipment (UE) or MTC devices 102, 104, 105 are provided wireless access via at least one base station or similar wireless transmitting and/or receiving wireless infrastructure node or point. Such a node can be, for example, a base station or an eNodeB (eNB), or in a 5G system a Next Generation NodeB (gNB), or other wireless infrastructure node. These nodes will be generally referred to as base stations. Base stations are typically controlled by at least one appropriate controller apparatus, so as to enable operation thereof and management of mobile communication devices in communication with the base stations. The controller apparatus may be located in a radio access network (e.g. wireless communication system 100) or in a core network (CN) (not shown) and may be implemented as one central apparatus or its functionality may be distributed over several apparatus. The controller apparatus may be part of the base station and/or provided by a separate entity such as a Radio Network Controller. In Figure 1 control apparatus 108 and 109 are shown to control the respective macro level base stations 106 and 107. In some systems, the control apparatus may additionally or alternatively be provided in a radio network controller. Other examples of radio access system comprise those provided by base stations of systems that are based on technologies such as 5G or new radio, wireless local area network (WLAN) and/or WiMax (Worldwide Interoperability for Microwave Access). A base station can provide coverage for an entire cell or similar radio service area.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided.

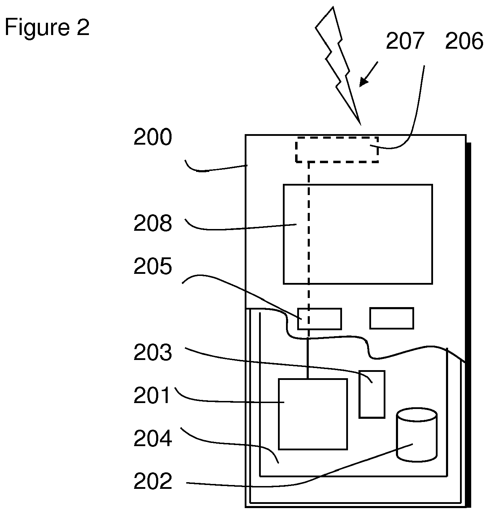

A possible wireless communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. In the present teachings the terms UE or "user" are used to refer to any type of wireless communication device.

The wireless device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the wireless device.

A wireless device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the wireless device by means of a suitable user interface such as key pad 205, voice commands, touch sensitive screen or pad, combinations thereof or the like. A display 208, a speaker and a microphone can be also provided. Furthermore, a wireless communication device may comprise appropriate connectors (either wired or wireless) to other devices and/or for connecting external accessories, for example hands-free equipment, thereto. The communication devices 102, 104, 105 may access the communication system based on various access techniques.

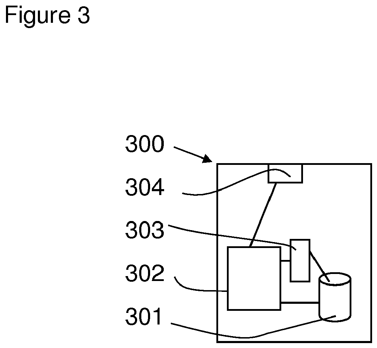

Figure 3 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302,303 and an input/output interface 304. Via the interface the control apparatus can be coupled to a receiver and a transmitter of the base station. The receiver and/or the transmitter may be implemented as a radio front end or a remote radio head. For example the control apparatus 300 or processor 201 can be configured to execute an appropriate software code to provide the control functions.

There will now be described some embodiments which relate to a flexible codeword (CW) to layer mapping operation for 5G/NR systems. The "layers" may relate to, for example, a number of data transmission layers. The data transmission layers comprise modulated bits the UE is transmitting. A "layer" relates to the possibility of transmitting, at the same time, different data streams on a communication channel, such as a physical downlink shared channel (PDSCH). Therefore in some examples a channel (e.g. PDSCH) may comprise a plurality of data streams, each data stream comprising a "layer". The layers may be further pre-coded and then mapped to the antenna ports of a base station or of a UE. The number of layers is typically related to the number of antenna ports at the UE or base station.

In an LTE system, two CWs are mapped on to a maximum of eight layers, according to specific rules written in the LTE specification. Layer mapping in Release 8 consists of two CWs mapped on four layers. This was further extended to eight layers in LTE Release 10. NR is considering the specification of a single codeword per PDSCH per transmission point (TRP). For multiple TRP operation, such as CoMP (coordinated multipoint) or distributed MIMO (multiple-input multiple-output), a single CW per TRP would be used, hence the UE would be receiving multiple PDSCHs, each having its own codeword. For a single point transmission, a single codeword means more conservative or limited link adaptation.

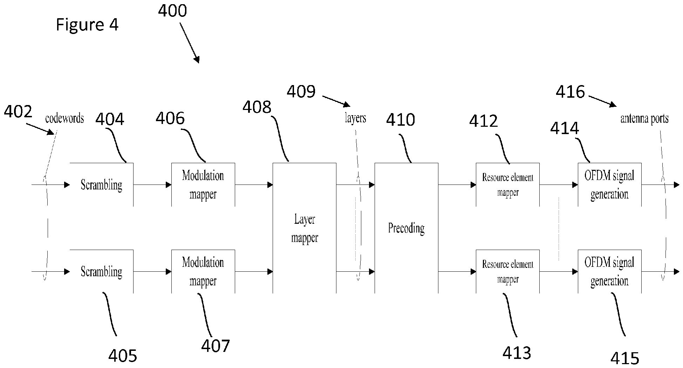

Figure 4 shows an example of components of a system or apparatus for mapping codewords to layers, according to LTE 36.211. The same or a similar system or apparatus may be used according to present embodiments, when configured appropriately.

The apparatus is shown generally at 400. A set of available codewords is shown schematically at 402. In this example two codewords are used. In this respect it is to be noted that the number of antenna ports 416 is two, and the number of layers 409 is two (in this example). That is there is one codeword per layer (and per antenna port). The codewords 402 are input to scramblers 404 and 405, before passing through modulation mappers 406 and 407. The layer mapper 408 maps these codewords to layers. The layers are schematically represented at 409. Precoding takes place using a coder as shown at 410. Resource element mappers 412 and 413 are then used, for determining which resource elements are to be used. OFDM (orthogonal frequency-division multiplexing) signal generation then takes place using generators 414 and 415. It will be understood that the elements/components shown in Figure 4 can be integrated or arranged in any way, and that the specific representation is for the purposes of explanation. For example generators 414 and 415 may comprise a single generator etc.

In LTE 36.211 the CW to layer mapping rules are specified as follows:

| Number of layers | Number of codewords | Codeword-to-layer mapping $i = 0,1,...,M_{symb}^{layer} - 1$ | |
|---|---|---|---|
| 1 | 1 | $x^{(0)}(i) = d^{(0)}(i)$ | $M_{symb}^{layer} = M_{symb}^{(0)}$ |
| 2 | 1 | $x^{(0)}(i) = d^{(0)}(2i)$ <br> $x^{(1)}(i) = d^{(0)}(2i+1)$ | $M_{symb}^{layer} = M_{symb}^{(0)}/2$ |
| 2 | 2 | $x^{(0)}(i) = d^{(0)}(i)$ <br> $x^{(0)}(i) = d^{(1)}(i)$ | $M_{symb}^{layer} = M_{symb}^{(0)} = M_{symb}^{(1)}$ |
| 3 | 1 | $x^{(0)}(i) = d^{(0)}(3i)$ <br> $x^{(1)}(i) = d^{(0)}(3i+1)$ <br> $x^{(2)}(i) = d^{(0)}(3i+2)$ | $M_{symb}^{layer} = M_{symb}^{(0)}/3$ |
| 3 | 2 | $x^{(0)}(i) = d^{(0)}(i)$ <br> $x^{(1)}(i) = d^{(1)}(2i)$ <br> $x^{(2)}(i) = d^{(1)}(2i+1)$ | $M_{symb}^{layer} = M_{symb}^{(0)} = M_{symb}^{(1)}/2$ |
| 4 | 1 | $x^{(0)}(i) = d^{(0)}(4i)$ <br> $x^{(1)}(i) = d^{(0)}(4i+1)$ <br> $x^{(2)}(i) = d^{(0)}(4i+2)$ <br> $x^{(3)}(i) = d^{(0)}(4i+3)$ | $M_{symb}^{layer} = M_{symb}^{(0)}/4$ |
| 4 | 2 | $x^{(0)}(i) = d^{(0)}(2i)$ <br> $x^{(1)}(i) = d^{(0)}(2i+1)$ <br> $x^{(2)}(i) = d^{(1)}(2i)$ <br> $x^{(3)}(i) = d^{(1)}(2i+1)$ | $M_{symb}^{layer} = M_{symb}^{(0)}/2 = M_{symb}^{(1)}/2$ |

(continued)

| Number of layers | Number of codewords | Codeword-to-layer mapping $i = 0,1,...,M_{symb}^{layer} - 1$ | |
| --- | --- | --- | --- |
| 5 | 2 | $x^{(0)}(i) = d^{(0)}(2i)$<br>$x^{(1)}(i) = d^{(0)}(2i+1)$<br>$x^{(2)}(i) = d^{(1)}(3i)$<br>$x^{(3)}(i) = d^{(1)}(3i+1)$<br>$x^{(4)}(i) = d^{(1)}(3i+2)$ | $M_{symb}^{layer} = M_{symb}^{(0)}/2 = M_{symb}^{(1)}/3$ |
| 6 | 2 | $x^{(0)}(i) = d^{(0)}(3i)$<br>$x^{(1)}(i) = d^{(0)}(3i+1)$<br>$x^{(2)}(i) = d^{(0)}(3i+2)$<br>$x^{(3)}(i) = d^{(1)}(3i)$<br>$x^{(4)}(i) = d^{(1)}(3i+1)$<br>$x^{(5)}(i) = d^{(1)}(3i+2)$ | $M_{symb}^{layer} = M_{symb}^{(0)}/3 = M_{symb}^{(1)}/3$ |
| 7 | 2 | $x^{(0)}(i) = d^{(0)}(3i)$<br>$x^{(1)}(i) = d^{(0)}(3i+1)$<br>$x^{(2)}(i) = d^{(0)}(3i+2)$ | $M_{symb}^{layer} = M_{symb}^{(0)}/3 = M_{symb}^{(1)}/4$ |
| | | $x^{(3)}(i) = d^{(1)}(4i)$<br>$x^{(4)}(i) = d^{(1)}(4i+1)$<br>$x^{(5)}(i) = d^{(1)}(4i+2)$<br>$x^{(6)}(i) = d^{(1)}(4i+3)$ | |
| 8 | 2 | $x^{(0)}(i) = d^{(0)}(4i)$<br>$x^{(1)}(i) = d^{(0)}(4i+1)$<br>$x^{(2)}(i) = d^{(0)}(4i+2)$<br>$x^{(3)}(i) = d^{(0)}(4i+3)$<br>$x^{(4)}(i) = d^{(1)}(4i)$<br>$x^{(5)}(i) = d^{(1)}(4i+1)$<br>$x^{(6)}(i) = d^{(1)}(4i+2)$<br>$x^{(7)}(i) = d^{(1)}(4i+3)$ | $M_{symb}^{layer} = M_{symb}^{(0)}/4 = M_{symb}^{(1)}/4$ |

In LTE 36.211 the UE is configured with channel state information (CSI) measurement reference symbols (RS). The CSI feedback computation is implementation specific. The UE computes the rank of the radio channel with the base station, and also PMI (precoding matrix indicator) and CQI (channel quality indicator). The rank may comprise a radio channel characteristic. The CQI computation may be determined as a result of having a PMI matrix and also codeword to layer mapping rule.

If a single CW per PDSCH (physical downlink shared channel) is utilized, in a multi transmission point (TRP) operation, the UE will receive multiple PDSCH signals, each having its own CW. For example in two transmission point (e.g. two base station) operation, two PDSCHs are received at the UE. Each PDSCH can contain a certain number of layers. From a UE perspective, it does not (need to) know where these PDSCHs are coming from. For example they can be from different TRPs or even from the same TRP. However, operation of multiple PDSCHs from a same TRP to a single UE is not possible without some changes as proposed further in this application.

As will now be described in more detail, embodiments enable multi-code word transmission from a single transmission point, in a situation where a UE is capable of receiving multiple PDSCHs from multiple TRPs (i.e. similar to dual connectivity), and also when a single code word is mapped to multiple layers. The operation exploits the fact that the UE does not necessarily need to know where the multiple PDSCHs are received from.

In some embodiments the implementation may happen in a transparent way, such that there is no specification impact. Enhanced implementations may require small amounts of specification changes.

Thus it may be considered that the embodiments utilise multiple code word transmission from the same TRP, when a single code word per PDSCH is utilised. For example consider a connection between a TRP and a UE. The UE is able to receive multiple PDSCHs, each PDSCH contains one codeword which is mapped to a number of layers. Hence if the TRP transmits two PDSCHs, then the UE receives two CWs (one per PDSCH) and each CW can be mapped for example on four layers. In total the UE will receive eight layers.

In order to enable such operation, feedback from one or more UEs needs to be constructed in a particular way. In particular the channel state information (CSI) feedback needs to be constructed in a particular way, as will be explained below.

In an embodiment, at a first-time instance, the gNB configures a first CSI reporting setting. This essentially defines what the UE will report to the gNB. In some embodiments the CSI reporting setting defines that the UE should provide information on one or more of: rank information, pre-coding matrix indicator information, and channel quality indicator (CQI) information. In some embodiments the reporting setting defines that the UE should provide one PMI and one CQI, having an assumption of one code word mapped to all layers.

The first CSI reporting setting is used to find out the full rank of the channel, and hence the total number of layers to be configured in second and third CSI reporting settings (explained below). In some embodiments the first CSI reporting setting information may be obtained based on channel reciprocity when a UE performs UL sounding, and a gNB can estimate the rank of the channel based on that.

At a second time instance, the gNB configures another (or second) CSI reporting setting for the UE. The gNB also indicates through codebook subset restriction that CSI feedback needs to be delivered for certain layers only. These layers may be considered a first set of layers. Such CSI feedback is characterized by a first code word.

The gNB also configures another (or third) CSI reporting setting. The gNB also indicates through code book subset restriction that CSI feedback needs to be delivered for certain layers only. These may be considered a second set of layers. In at least some embodiments the first set of layers is distinct from the second set of layers i.e. no layer is present in both the first and second sets. The CSI feedback defined by the third CSI reporting setting may be considered to correspond to a second code word.

In embodiments, the segregation of layers between sets can be carried out in any way. For example consider a set of four layers, namely layers 1, 2, 3 and 4. The first codeword can be associated with layers 1 and 2, and the second codeword can be associated with layers 3 and 4. Alternatively the first codeword can be associated with layers 1 and 3, and the second codeword can be associated with layers 2 and 4. Or alternatively the first codeword can be associated with layer 1, and the second codeword can be associated with layers 2, 3 and 4 etc.

The above two CSI reporting settings (i.e. the "second" and "third" reporting settings in the above example) are transmitted to the UE at the same time. Therefore it may be considered that these two CSI reporting settings are sent to the UE simultaneously or substantially simultaneously.

The downlink data is then received at the UE on multiple PDSCHs being transmitted from a same TRP (e.g. the gNB referred to above). The connection may therefore be between a single base station and single UE. This may be considered Single User MIMO, or SU MIMO.

Therefore the UE is configured with two (or more) CSI reporting settings. Each CSI reporting setting consists of different code book subset restrictions. The code book subset restrictions group the layers in a specific way, emulating code word to layer mapping rules. The code book subset restriction rules may be based on bitmaps. In some embodiments the code book subset restriction rules are radio resource control (RRC) configured. This may be applied in the present case, where several configurations may be defined in the specification and dynamically selected/indicated through downlink control information (DCI).

Therefore it may be considered that embodiments allow grouping of layers across multiple TRPs based on gNB indication. The grouping may follow the UE indication of per PDSCH COI.

In embodiments the two CSI reporting settings operate on the same resource setting. A resource setting may for example consist of channel state information reference symbols (CSI - RS). By using the same resource setting the UE saves computation complexity in terms of channel estimation.

Further configurations can be signalled and tagged to the resource setting. For example this may indicate that the PMI component is the same for the two CSI reporting settings. An alternative to this would be to have such signalling inside the CSI reporting setting itself. This means that the CSI reporting settings are linked to each other in a form that the same specific configuration is used across the settings.

In order to enable the multiple PDSCH (multi code word) transmission from a same or single TRP, the CSI feedback from the UE needs to be constructed in a particular way. More particularly, the gNB needs to instruct the UE on how to construct the COI so that correct code word to layer mapping is carried out. Correct code word to layer mapping enables the COI computation.

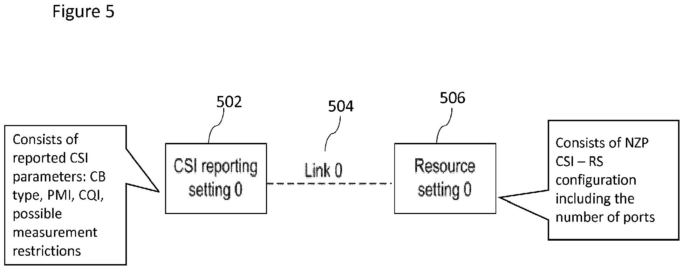

Some embodiments will now be described with respect to Figure 5.

At a first time instance a gNB configures with a first CSI reporting setting resource. The CSI reporting setting is shown at 502. In this example the CSI reporting setting is designated "0". Using the CSI reporting setting the UE may provide one or more of: rank information, PMI information and CQI information. This may assume one code word mapped to all layers.

This is linked with a resource setting indicating resource elements on which channel and interference estimation may be performed. The link is shown at 504. The resource setting is shown at 506. In the example of Figure 5 the resource setting is designated "0". The resource setting may consist of indexed zero power (ZP) and/or non-zero power (NZP) CSI - RS configuration. This may include the number of ports (e.g. antenna ports). The step of linking the CSI reporting setting with the resource setting enables the rank of the channel to be obtained. This may allow the gNB to determine how many layers need to be scheduled. This also enables the gNB to determine how the layers need to be grouped. In embodiments this information is indicated to the UE using code book subset restriction signalling, as described further below.

The CSI reporting setting 0 indicates through code book subset restriction that CSI feedback needs to be delivered for certain layers only. Such CSI feedback may be considered to correspond to a first code word.

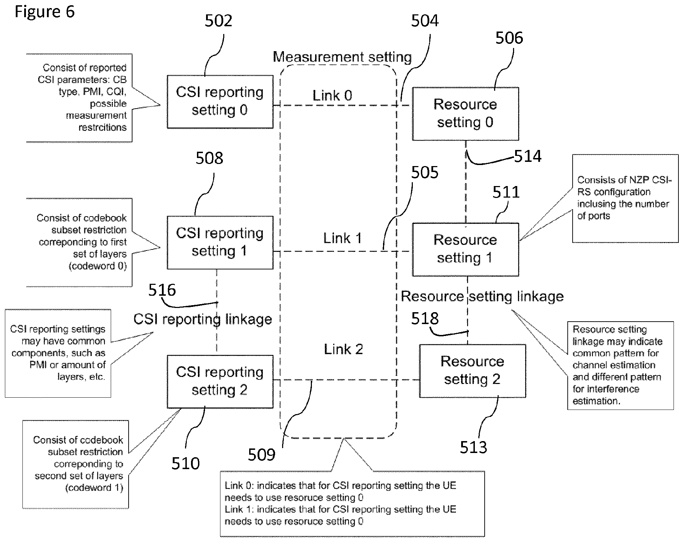

The process for two code word CSI feedback can be further understood by viewing Figure 6. This process can also be generalised for more code words by simply configuring multiple CSI reporting settings (e.g. CSI reporting setting one, CSI reporting setting two, CSI reporting setting three etc).

Following on from Figure 5, at a second time instant the gNB configures a further CSI reporting setting. This is in response to receiving the measurement report from the UE. In embodiments the UE informs the gNB the full rank (number of layers), then the gNB can further split the layers in the multiple PDSCHs.

In Figure 6 the further CSI reporting setting is shown as CSI reporting setting 1, designated 508. The CSI reporting setting 1 indicates through code book subset restriction that CSI feedback needs to be delivered for certain layers only. Such CSI feedback may be considered to correspond to a further (or in this example, second) code word (e.g. "codeword 0").

As shown in Figure 6 CSI reporting setting 1 508 is linked to resource setting 1 shown at 511, via link 505.

Therefore link 0 indicates that for CSI reporting setting 0 the UE needs to use resource setting 0. Link 1 indicates that for CSI reporting setting 1 the UE needs to use resource setting 1.

The CSI reporting settings 0 and 1 can share same CSI components such as PMI, number of layers, etc. This means that the same PMI can be used in both CSI settings

As shown in Figure 6 the gNB configures several CSI reporting settings. This includes further CSI reporting setting 2, shown at 510.

For CSI reporting setting 2, indicated at 510, the gNB indicates through code book subset restriction that CSI feedback needs to be delivered only for certain layers. Such CSI feedback may therefore be considered to correspond to a further (or in this example, third) code word (e.g. "codeword 1 ").

In some embodiments the gNB indicates that PMI, rank and CQI need to be delivered. Such feedback may be delivered with the assumption of a single codeword mapped to all layers.

It can be appreciated from Figure 6 that the resource settings are associated with each other. For example resource setting 0 506 is associated or linked to resource setting 1 via association or link 514. Resource setting 1 511 is associated with or linked to resource setting 2 513 via link or association 518. Accordingly resource setting 2 is also associated or linked with resource setting 0. In some embodiments each resource setting is different. In some embodiments each resource setting is the same. Therefore in some embodiments it may be considered that each CSI reporting setting is linked to the same resource setting.

Therefore in some embodiments each CSI reporting setting may operate on the same CSI - RS pattern. The links map the resource setting to the two (or more) CSI reporting settings. If more code words need to be used, then more CSI reporting settings can be created.

Therefore Figure 6 may be considered to show a unified CSI framework.

Thus, procedure at the UE may be considered to comprise:

- UE receives indication of CSI framework which consists of the CSI reporting settings, resource setting and measurement setting.
- UE computes CSI according to the CSI reporting settings. In particular the UE report is a CQI corresponding to all layers, and CQIs corresponding to the configured layer grouping
- The UE receives downlink transmissions in the form of multiple PDSCHs.

Procedure from the gNB may be considered to comprise the following:

- gNBs configure CSI framework in terms of multiple CSI reporting settings. Some of the CSI reporting setting comprises of code book subset restriction information, or code book subset restriction information containing particular layer grouping.
- gNB receives the CSI feedback according to the configured CSI framework.
- gNB transmits multiple PDSCH transmission, for each PDSCH utilising the CSI information received based on the code book subset restriction CSI reporting setting.

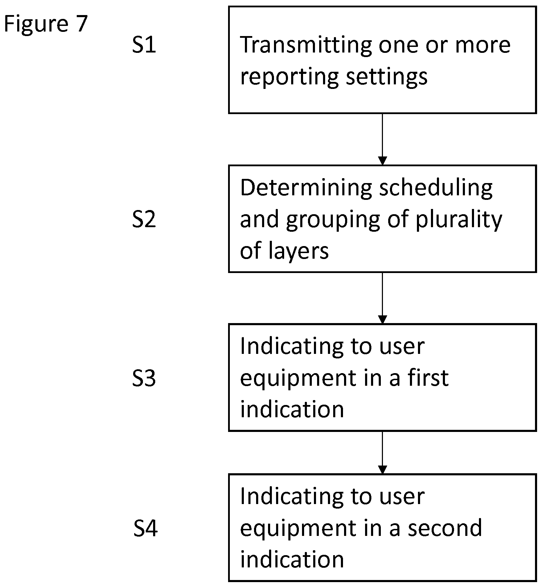

Figure 7 is a flowchart of a method according to an embodiment, viewed from the perspective of a base station (e.g. gNB) apparatus.

At step S1, the apparatus transmits one or more reporting settings from a user equipment. The one or more reporting settings are associated with a reporting resource on which the user equipment is to provide one or more measurements.

At step S2, and in response to receiving one or more measurements from the user equipment, the apparatus determines scheduling and grouping of a plurality of layers of a communication resource.

At step S3, using a first code setting, the apparatus indicates to the user equipment in a first indication that reporting from the user equipment is to be configured for a first set of one or more communication layers of the plurality of layers.

At step S4, using a second code setting, the apparatus indicates to the user equipment in a second indication that reporting from the user equipment is to be configured for a second set of one or more communication layers of the plurality of layers.

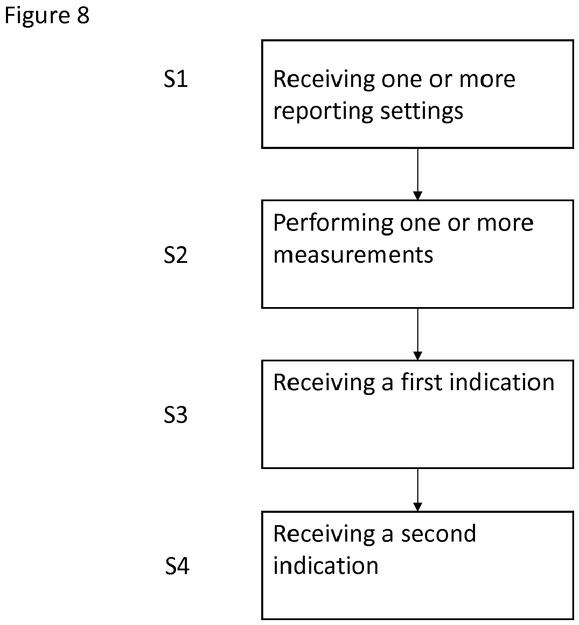

Figure 8 is a flowchart of a method according to an embodiment, viewed from the perspective of a user equipment apparatus.

At step S1, the apparatus receives one or more reporting settings. The one or more reporting settings are associated with a reporting resource on which the apparatus is to provide one or more measurements.

At step S2 the apparatus performs one or more measurements, and transmits the measurements to a base station.

At step S3 the apparatus receives a first indication, the first indication indicating that reporting from the apparatus is to be configured for a first set of one or more communication layers of a plurality of layers of a communication resource.

At step S4 the apparatus receives a second indication, the second indication indicating that reporting from the user equipment is to be configured for a second set of one or more communication layers of the plurality of layers.

Thus it may be considered that embodiments provide a flexible way for the network to configure multiple code words to be transmitted from the same TRP. For example when a single CW is mapped to all the layers and to a single PDSCH.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims. Indeed there is a further embodiment comprising a combination of one or more embodiments with any of the other embodiments previously discussed.

**Claims**

1. A method comprising:

   transmitting one or more reporting settings from an apparatus to a user equipment, the one or more reporting settings associated with a reporting resource on which the user equipment is to provide one or more measurements;
   in response to receiving one or more measurements from the user equipment, determining scheduling and grouping of a plurality of layers of a communication resource;
   using a first code setting, indicating to the user equipment in a first indication that reporting from the user equipment is to be configured for a first set of one or more communication layers of the plurality of layers; and
   using a second code setting, indicating to the user equipment in a second indication that reporting from the user equipment is to be configured for a second set of one or more communication layers of the plurality of layers.

2. A method as set forth in claim 1, comprising using information received from the user equipment to transmit to the user equipment, from a single transmission point, using multiple physical downlink shared channels.

3. A method as set forth in any preceding claim, wherein the reporting setting comprises a channel state information reporting setting indicating to the user equipment to provide one or more measurements of: rank information; precoding matrix indicator information; channel quality indicator information.

4. A method as set forth in any preceding claim, the first code setting associated with a first reporting setting and the second code setting being associated with a second reporting setting, the first and second reporting settings associated with respective first and second resource settings, the first and second resource settings being linked or associated with each other.

5. A method comprising:

   receiving at an apparatus one or more reporting settings, the one or more reporting settings associated with a reporting resource on which the user equipment is to provide one or more measurements;
   performing one or more measurements at the apparatus, and transmitting the measurements to a base station;
   receiving at the apparatus a first indication, the first indication indicating that reporting from the apparatus is to be configured for a first set of one or more communication layers of a plurality of layers of a communication resource;
   receiving at the apparatus a second indication, the second indication indicating that reporting from the apparatus is to be configured for a second set of one or more communication layers of the plurality of layers.

6. A method as set forth in claim 5, the measurements comprising one or more measurements of: rank information; precoding matrix indicator information; channel quality indicator information.

7. A method as set forth in claim 5 or claim 6, comprising transmitting a first channel quality indicator associated with all layers of the plurality of layers, transmitting a second channel quality indicator associated with the first set of one or more communication layers, and transmitting a third channel quality indicator associated with the second set of one or more communication layers.

8. A method as set forth in any of claims 5 to 7, wherein the reporting from the apparatus for the first set of one or more communication layers, and the reporting from the apparatus for the second set of one or more communication layers both use the same reporting resource, the reporting resource comprising a channel state information reference signal pattern.

9. A method as set forth in any of claims 5 to 8, wherein the apparatus is configured to determine a first channel quality indicator based on a first codebook subset restriction indication, and the apparatus is configured to determine a second channel quality indicator based on a second codebook subset restriction indication.

10. A computer program comprising program code means adapted to perform the steps of any of claims 1 to 9 when the program is run on a data processing apparatus.

11. An apparatus comprising at least one processor, and at least one memory including computer program code, wherein the at least one memory and the computer program code are configured, with the at least one processor, to:

transmit one or more reporting settings from the apparatus to a user equipment, the one or more reporting settings associated with a reporting resource on which the user equipment is to provide one or more measurements;
in response to receiving one or more measurements from the user equipment, determine scheduling and grouping of a plurality of layers of a communication resource;
using a first code setting, indicate to the user equipment in a first indication that reporting from the user equipment is to be configured for a first set of one or more communication layers of the plurality of layers; and
using a second code setting, indicate to the user equipment in a second indication that reporting from the user equipment is to be configured for a second set of one or more communication layers of the plurality of layers.

12. An apparatus comprising at least one processor, and at least one memory including computer program code, wherein the at least one memory and the computer program code are configured, with the at least one processor, to:

receive at the apparatus one or more reporting settings, the one or more reporting settings associated with a reporting resource on which the user apparatus is to provide one or more measurements;
perform one or more measurements at the apparatus, and transmitting the measurements to a base station;
receive at the apparatus a first indication, the first indication indicating that reporting from the apparatus is to be configured for a first set of one or more communication layers of a plurality of layers of a communication resource;
receive at the apparatus a second indication, the second indication indicating that reporting from the apparatus is to be configured for a second set of one or more communication layers of the plurality of layers.

13. An apparat as set forth in claim 12, the measurements comprising one or more measurements of: rank information; precoding matrix indicator information; channel quality indicator information.

14. An apparatus as set forth in claim 12 or in claim 13, the apparatus configured to transmit a first channel quality indicator associated with all layers of the plurality of layers, and transmit a second channel quality indicator associated with the first set of one or more communication layers, and transmit a third channel quality indicator associated with the second set of one or more communication layers.

15. An apparatus as set forth in any of claims 12 to 14, wherein the reporting from the apparatus for the first set of one or more communication layers, and the reporting from the apparatus for the second set of one or more communication layers both use the same reporting resource, the reporting resource comprising a channel state information reference signal pattern.

Figure 1

Figure 2

207  206

200

208

205

203

201

204

202

Figure 3

300

304

303

302

301

Figure 4

400

402 codewords 404 406 408 409 layers 410 412 416 antenna ports 414

| Scrambling | → | Modulation mapper | → |
|---|---|---|---|

Layer mapper

Precoding

| Resource element mapper | → | OFDM signal generation | → |

| Scrambling | → | Modulation mapper | → |
|---|---|---|---|

| Resource element mapper | → | OFDM signal generation | → |

405 407 413 415

Figure 5

502      504      506

| Consists of reported CSI parameters: CB type, PMI, CQI, possible measurement restrictions | CSI reporting setting 0 | Link 0 | Resource setting 0 | Consists of NZP CSI – RS configuration including the number of ports |

Figure 6

502    504

506

Consist of reported
CSI parameters: CB
type, PMI, CQI,
possible
measurement
restrcitions

Measurement setting

CSI reporting
setting 0

Link 0

Resource
setting 0

514

508

505

511

Consist of codebook
subset restriction
correponding to first
set of layers
(codeword 0)

CSI reporting
setting 1

Link 1

Resource
setting 1

Consists of NZP CSI-
RS configuration
inclusing the number
of ports

516

CSI reporting linkage

Resource setting linkage

CSI reporting settings
may have common
components, such as
PMI or amount of
layers, etc.

518

Link 2

CSI reporting
setting 2

Resource
setting 2

Resource setting
linkage may indicate
common pattern for
channel estimation
and different pattern
for interference
estimation.

513

Consist of codebook
subset restriction
correponding to
second set of layers
(codeword 1)

510    509

Link 0: indicates that for CSI reporting setting the UE
needs to use resoruce setting 0
Link 1: indicates that for CSI reporting setting the UE
needs to use resoruce setting 0

Figure 7

S1 | Transmitting one or more reporting settings

S2 | Determining scheduling and grouping of plurality of layers

S3 | Indicating to user equipment in a first indication

S4 | Indicating to user equipment in a second indication

Figure 8

| S1 | Receiving one or more reporting settings |
|----|------------------------------------------|
| S2 | Performing one or more measurements |
| S3 | Receiving a first indication |
| S4 | Receiving a second indication |

Europäisches
Patentamt

European
Patent Office

Office européen
des brevets

# EUROPEAN SEARCH REPORT

Application Number

EP 17 15 6029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALCATEL-LUCENT ET AL: "Correction on CSI reporting type and parameters", 3GPP DRAFT; 36213_CR0445R2_(REL-11)_R1-136073, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 2 December 2013 (2013-12-02), XP050732949, Retrieved from the Internet: URL:http://www.3gpp.org/ftp/Meetings_3GPP_SYNC/RAN/RAN/Docs/ [retrieved on 2013-12-02] * the whole document * ----- | 1-15 | INV. H04L1/00 |
| X | ERICSSON: "About the number of codewords", 3GPP DRAFT; R1-1702669, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051209816, Retrieved from the Internet: URL:http://www.3gpp.org/ftp/Meetings_3GPP_SYNC/RAN1/Docs/ [retrieved on 2017-02-12] * page 1 - page 4 * ----- -/-- | 1-15 | TECHNICAL FIELDS SEARCHED (IPC) H04L |

The present search report has been drawn up for all claims

| Place of search | Date of completion of the search | Examiner |
|---|---|---|
| Munich | 31 July 2017 | Vucic, Nikola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 15 6029

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AT&T: "UE Assisted UCI Format Selection for NR", 3GPP DRAFT; R1-1700320 UE ASSISTED UCI FORMAT SELECTION FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 10 January 2017 (2017-01-10), XP051202799, Retrieved from the Internet: URL:http://www.3gpp.org/ftp/tsg_ran/WG1_RL 1/TSGR1_AH/NR_AH_1701/Docs/ [retrieved on 2017-01-10] * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 31 July 2017 | Vucic, Nikola |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)